# FASCICULE DE BREVET EUROPEEN

(11) **EP 4 060 151 B1**
(45) Date de publication et mention de la délivrance du brevet: **27.12.2023**
(21) Numéro de dépôt: 22161544.6
(22) Date de dépôt: 11.03.2022
(51) Int. Cl.: E05B 85/10

(54) **COMMANDE D'OUVERTURE EXTÉRIEURE À PALETTE POLY-ARTICULÉE**
EXTERNE OFFNUNGSSTEUERUNG MIT POLY-ARTIKULIERTEM PADDEL
EXTERNAL OPENING DEVICE WITH POLY-ARTICULATED PADDLE

(30) Priorité: 16.03.2021 FR 2102599
(43) Date de publication de la demande: 21.09.2022
(73) Titulaire: Akwel Vigo Spain SL, 36213 Vigo Pontevedra (ES)
(72) Inventeur: REGUEIRO BLANCO, Agustin, 15008 A Coruna (ES); GARCIA RODRIGUEZ, Julio, 36003 Pontevedra (ES)
(74) Mandataire: Martin, Marie-Aude

(56) Documents cités:
- EP-A1- 1 985 784
- DE-A1-102009 045 871
- FR-A1- 2 857 684
- FR-A1- 3 034 713
- FR-A1- 3 069 003
- US-A1- 2011 080 010

## Description

La présente invention concerne une commande d'ouverture extérieure pour une porte de d'un véhicule automobile. Plus particulièrement, cette invention se rapporte à une commande d'ouverture extérieure d'une porte latérale de véhicule automobile, pouvant être indifféremment une porte avant ou une porte arrière, commande qui est intégrée et dissimulée dans un montant, par exemple un montant de la carrosserie du véhicule délimitant une vitre latérale ou encore un montant arrière d'un panneau de custode, adjacent à la porte considérée.

Les portes latérales des véhicules automobiles sont généralement équipées d'une commande d'ouverture dont la partie apparente est une poignée, désignée couramment palette de préhension, présentant une forme générale comparable à celle d'une poignée de porte de réfrigérateur. De telles poignées forment en général des excroissances importantes sur les flancs de la carrosserie du véhicule ou, même si elles sont plus ou moins encastrées dans le panneau de porte, elles restent très apparentes.

Une tendance actuelle, dans la conception des véhicules automobiles, est de rendre les commandes discrètes, en essayant de les occulter. En particulier, en ce qui concerne les commandes d'ouverture extérieures de portes, il a déjà été proposé de dissimuler ces commandes en les intégrant dans l'encadrement de la porte, ceci en prévoyant une poignée du genre palette affleurant un montant situé à l'arrière de la vitre de la porte considérée. Un exemple de commande d'ouverture extérieure de porte de ce genre peut être trouvé dans la demande de brevet français FR3034713A1.

Toutefois, une telle commande d'ouverture extérieure n'est pas totalement dis-simulable sur le montant, car la palette comporte nécessairement une importante découpe centrale prévue pour l'introduction de la main et la manipulation de cette palette. Ainsi, il subsiste au niveau de l'implantation de la commande d'ouverture sur le montant, des lignes de délimitation des différents organes composant la commande d'ouverture qui nuisent à la perception globale de l'ensemble par un observateur.

L'invention a notamment pour but de fournir une commande d'ouverture extérieure remédiant aux inconvénients précités de l'art antérieur.

A cet effet, l'invention a notamment pour objet une commande d'ouverture extérieure pour un ouvrant d'un véhicule automobile, en particulier une porte latérale arrière du véhicule, configurée pour être intégrée et dissimulée dans un montant de vitre de l'ouvrant, la commande comprenant un organe de manoeuvre manuel du genre palette de préhension, un socle d'interface agencé selon le montant et sur lequel est monté articulé la palette entre une position de repos intégrée au montant en affleurement et une position de travail déployée en saillie du montant, caractérisé en ce qu'elle comprend un mécanisme d'articulation de la palette sur le socle configuré pour autoriser un déplacement de la palette selon une trajectoire en élévation et en pivotement par rapport au socle et en ce que la palette comprend un enjoliveur du montant, solidaire de la palette, conformé pour habiller au moins partiellement le pourtour du montant et pour recouvrir le socle d'interface dans la position de repos.

La commande d'ouverture extérieure ne présente au repos aucune excroissance et aucune interruption vis-à-vis du profil de la carrosserie au niveau du montant. L'enjoliveur formé par la palette s'intègre parfaitement sur le montant par exemple d'un bord à l'autre du montant ce qui d'assurer une finition esthétique du véhicule.

La prise en main de la palette se fait simplement par exemple par introduction de la main sous la palette pour réaliser sa préhension et pouvoir entraîner en mouvement la palette selon une trajectoire en élévation et en inclinaison. La préhension de la palette est également optimisée d'un point de vue ergonomique car elle permet de limiter l'amplitude de torsion du poignet de l'usager grâce à sa composante de trajectoire en élévation. Enfin, grâce au mécanisme d'articulation permettant un déplacement de la palette selon une composante de trajectoire en élévation en plus d'une composante de trajectoire circulaire, la forme générale de la palette peut présenter une géométrie complexe permettant de s'adapter au profil du montant sur lequel la commande d'ouverture est destiné à être intégrée. La forme générale de la palette n'est ainsi plus limitée à des contraintes de débattement angulaire à l'intérieur de son socle de réception.

Comme cela est connu en soi, le déplacement de la palette va provoquer l'actionnement d'un mécanisme interne de la commande d'ouverture, par exemple l'actionnement d'un levier de renvoi qui, lui-même, exerce une traction sur un câble d'ouverture de la serrure de la porte concernée.

Une commande d'ouverture selon l'invention peut en outre comporter l'une des caractéristiques suivantes.

Dans le mode de réalisation préféré, l'enjoliveur est configuré pour délimiter au moins un tronçon du montant d'un bord à l'autre du montant selon une direction sensiblement transversale à ce montant.

Dans le mode de réalisation préféré, l'enjoliveur est conformé pour épouser parfaitement la forme extérieure du montant.

Dans le mode de réalisation préféré, la palette présente une face extérieure décorative formant l'enjoliveur et une face interne opposée masquée coopérant par le mécanisme d'articulation avec le socle d'interface.

Dans le mode de réalisation préféré, la palette, ayant une forme générale de plaque délimitant une face externe visible formant l'enjoliveur et une face interne opposée, est pourvue d'une partie renflée creuse ménagée en saillie sur la face interne délimitant un logement concave adapté pour recevoir la main d'un utilisateur souhaitant saisir la palette.

Dans le mode de réalisation préféré, le socle comprend une face interne pourvue d'une partie en forme de boîtier creux dans laquelle la partie renflée de la palette peut s'encastrer complètement par complémentarité de forme.

Dans le mode de réalisation préféré, ledit la partie renflée creuse de la palette étant pourvue de deux pattes munies chacune d'un orifice transversal pour le passage d'un axe d'articulation du mécanisme d'articulation, chaque patte est configurée pour traverser le boîtier du socle par un évidement ménagé dans le boîtier.

Dans le mode de réalisation préféré, la palette comprend une face externe décorative recouverte d'un revêtement d'habillage de type adhésif mat ou brillant.

Dans le mode de réalisation préféré, le socle comprend une pièce guide-vitre et l'enjoliveur est configuré pour recouvrir cette pièce.

Dans le mode de réalisation préféré, le mécanisme d'articulation comprend des premier et deuxième leviers articulés sur la palette et le socle afin de définir avec la palette et le socle une liaison de type quadrilatère articulé.

Dans le mode de réalisation préféré, chaque levier comprend des portions proximale et distale connectées de manière rotative respectivement à la palette et au socle et la portion distale d'au moins un des leviers est pourvue d'une fourche à deux branches entre lesquelles s'étend la portion proximale de l'autre des leviers dans une configuration escamotée du mécanisme d'articulation.

Dans le mode de réalisation préféré, la commande comprend un levier de renvoi d'actionnement d'une serrure de l'ouvrant monté pivotant autour d'un axe solidaire du socle, le mécanisme d'articulation coopérant avec le levier de renvoi de façon à provoquer le pivotement du levier de renvoi lors du déplacement de l'organe.

Dans le mode de réalisation préféré, l'enjoliveur comprend un bord latéral prévu pour être monté du côté d'un panneau vitré de l'ouvrant présentant un contour non rectiligne.

L'invention concerne un ouvrant de véhicule automobile comprenant une commande d'ouverture extérieure caractérisé en ce que la commande d'ouverture est une commande d'ouverture selon l'invention intégrée et dissimulée dans un montant d'un panneau de vitre de l'ouvrant.

L'invention concerne enfant un véhicule automobile comprenant un ouvrant selon l'invention, dans lequel la commande d'ouverture est accessible à la préhension par une cavité ménagée dans une paroi du véhicule qui est adjacente au montant de l'ouvrant, tel qu'une paroi d'un panneau de custode.

D'autres caractéristiques et avantages de l'invention apparaîtront à la lumière de la description qui suit, faite en référence aux dessins annexés dans lesquels :
[fig.1] : la [fig.1] représente une vue en perspective d'un véhicule automobile comprend une commande d'ouverture extérieure selon l'invention ;
[fig.2] : la [fig.2] représente une vue partielle à échelle agrandie illustrant la commande d'ouverture extérieure de la [fig.1] ;
[fig.3] : la [fig.3] représente une vue en perspective avant de la commande d'ouverture extérieure d'un ouvrant arrière des figures 1 et 2 ;
[fig.4] : la [fig.4] représente une vue en perspective d'une face interne d'une palette de préhension de la commande d'ouverture de la [fig.3] ;
[fig.5] : la [fig.5] représente une vue en perspective d'une face interne du socle d'interface de la commande d'ouverture de la [fig.3] ;
[fig.6] : la [fig.6] représente une vue en perspective des leviers d'articulation d'un mécanisme d'articulation de la commande d'ouverture représentée sur la [fig.3] ;
[fig.7] : la [fig.7] représente une vue en perspective à échelle agrandie d'un levier de renvoi levier d'actionnement mécanique d'une serrure de la commande d'ouverture de la commande d'ouverture représentée sur la [fig.3] ;
[fig.8] : la [fig.8] représente une vue en perspective de dessous de la commande d'ouverture représentée sur la [fig.3] dans une position de repos ;
[fig.9] : la [fig.9] représente une vue en coupe de la commande représentée sur la [fig.8] ;
[fig.10] : la [fig.10] représente une vue en perspective de dessous de la commande d'ouverture représentée sur la [fig.3] dans une position déployée ;
[fig.11] : la [fig. 11] représente une vue en coupe de la commande représentée sur la [fig.10].

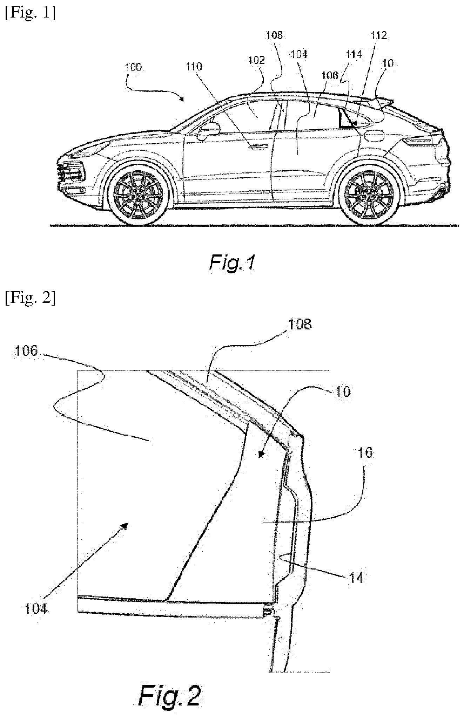

On a représenté sur la [fig.1] un véhicule automobile désigné par la référence générale 100. Ce véhicule 100 est un véhicule à quatre portes, avec deux portes latérales avant 102 et deux portes latérales arrière 104.

Ces portes latérales 102 et 104 sont toutes équipées de commandes d'ouverture extérieures, à savoir une commande d'ouverture 110 pour chaque porte avant 102 et une commande d'ouverture 10 selon l'invention pour chaque porte arrière 104.

Chaque porte latérale 102 ou 104 comprend un caisson de portière comportant classiquement une structure porteuse qui est partie intégrante de la carrosserie du véhicule, doublée d'une paroi de portière extérieure formée par une tôle externe du véhicule et désignée par panneau de porte.

La structure porteuse de la portière comprend également, dans le prolongement du panneau de porte, un cadre 108 qui définit le contour supérieur de la porte et à l'intérieur duquel s'étend généralement un panneau vitré 106 mobile ou fixe. Dans l'exemple illustré, le cadre de vitre 108 est destiné à encadrer et maintenir la vitre et comprend deux montants latéraux s'étendant verticalement et pouvant être reliés ou non à leurs extrémités supérieures par une traverse horizontale.

Sur chaque côté du véhicule, dans l'exemple illustré, la commande d'ouverture 110 de la porte avant 102 est montée sur la carrosserie extérieure de la porte avant 102 et se présente sous la forme d'une poignée montée en saillie du panneau de porte en regard d'un creux formé dans la tôle de ce panneau. La poignée est sous forme d'un corps longiligne extérieurement convexe de manière à former, entre le corps et la tôle, une ouverture de passage des doigts d'une main dans le creux pour permettre la traction de la poignée afin d'ouvrir la porte.

Conformément à l'invention, la commande d'ouverture 10 de la porte arrière 104 est implantée à proximité d'un montant vertical arrière 114, au niveau d'un montant vertical du cadre de la vitre de cette porte arrière 104.

Dans l'exemple illustré, le montant arrière 114 sépare une vitre de la porte arrière 104 d'un panneau plein de custode 112 et dans ce cas, la commande d'ouverture 10 est implantée à proximité de ce panneau de custode 112. Bien entendu, dans une variante non illustrée, le véhicule peut comporter un panneau de custode vitré (connue selon la terminologie anglo-saxonne par l'expression « quarter window »).

La [fig.2] montre, plus particulièrement, la commande d'ouverture 10 extérieure associée à la porte arrière 104 conforme à une forme de réalisation de l'invention. Cette commande 10 comprend un organe de manoeuvre 12 manuel qui se présente extérieurement sous forme d'une palette de préhension 12.

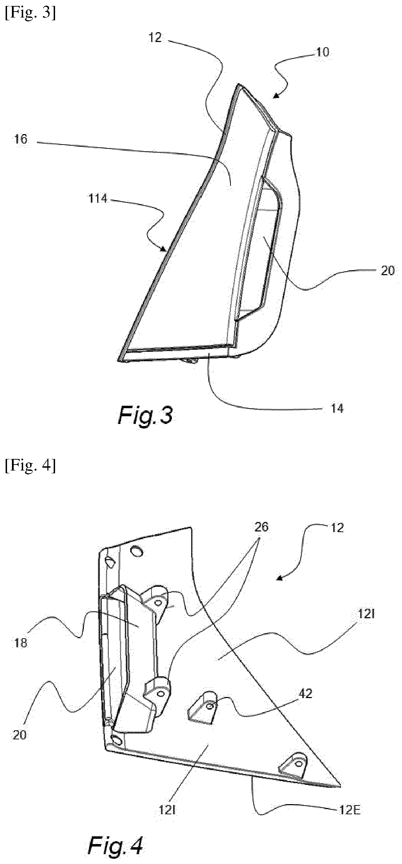

En outre, en référence à la [fig.2] ou la [fig.3], la commande 10 comprend un socle d'interface 14 sur lequel l'organe de manoeuvre 12 est monté articulé mobile par rapport au socle 14 entre une position de repos intégrée en affleurement du montant arrière 114 et une position de fonctionnement faisant saillie par rapport au montant arrière 114.

A cet effet, la commande 10 comprend encore un mécanisme 30 d'articulation de la palette 12 sur le socle 14 configuré pour autoriser un déplacement de la palette 12 selon une trajectoire en élévation et en inclinaison par rapport au socle 14.

Conformément à l'invention, l'organe 12 comprend un enjoliveur 16 du montant 114 conformé pour habiller au moins partiellement le pourtour du montant 114 et pour recouvrir le socle d'interface 14 dans la position de repos.

De préférence, l'enjoliveur 16 est configuré pour délimiter au moins un tronçon du montant 114 d'un bord à l'autre du montant 114 selon une direction sensiblement transversale à ce montant 114. Avec une telle configuration, l'enjoliveur 16 ne présente aucune interruption inesthétique d'un bord à l'autre du montant 114.

Dans l'exemple illustré et dans une forme de réalisation de l'invention préférée, l'enjoliveur 16 est conformé pour épouser parfaitement la forme extérieure du montant 114. Cette conformation de l'enjoliveur 16 garantit une finition esthétique de la commande d'ouverture 10 optimale.

De préférence, l'enjoliveur 16 a une forme générale allongée destinée à s'étendre longitudinalement verticalement le long d'un côté du cadre 108 du panneau vitré 106. L'enjoliveur 16 s'étend, dans cet exemple, à une de ses bordures latérales (à gauche de la [fig.2]) sur le cadre de vitre 106 et à l'autre de ses bordures latérales (à droite de la [fig.2]) en bord périphérique de portière arrière 104.

Comme cela est visible sur les figures 1 à 4, cette palette 12 est constituée par exemple d'un flanc en matière plastique sensiblement plat. Cette palette 12 présente par exemple une face extérieure décorative 12E formant l'enjoliveur 16 et une face interne 12I masquée montée articulée sur le socle 14.

De préférence, la palette 12 comprend sur sa face externe décorative 12E un revêtement d'habillage de type adhésif mat ou brillant, généralement d'une couleur foncée telle qu'une couleur noire. En outre, ce revêtement d'habillage peut de préférence être choisi identique au revêtement du panneau de custode plein 112.

Dans l'exemple décrit, la palette 12 a une forme générale de plaque délimitant la face externe visible 12A formant l'enjoliveur 16.

En outre, de préférence, la face interne masquée 12B de la palette 12 est pourvue d'une partie renflée creuse 18 ménagée en saillie sur la face interne 12B délimitant un logement concave 20 adapté pour recevoir la main d'un utilisateur souhaitant saisir la palette 12. Dans l'exemple illustré, le logement concave 20 est ouvert du côté d'un bord extérieur latéral de l'ouvrant 104.

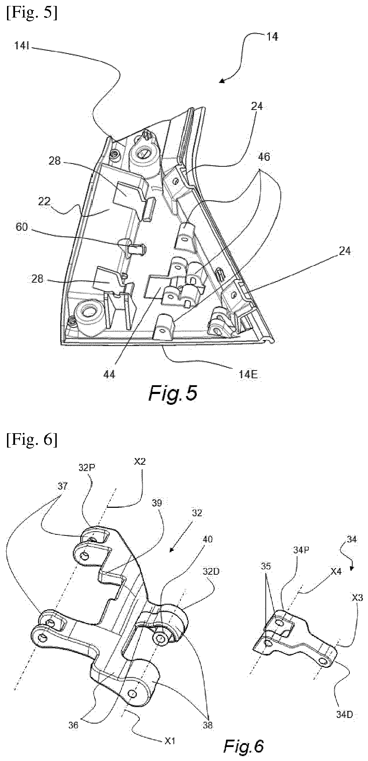

On a représenté sur la [fig.5] le socle d'interface 14 formant support de la palette 12 sur lequel la palette 12 est montée articulée comme cela va être décrit ci-après.

Dans l'exemple illustré, le socle 14 comprend une face externe 14E et une face interne 14I tournée en direction de l'ouvrant 104 et fixée directement par exemple à un montant de carrosserie de l'ouvrant 104 par divers moyens de fixation prévus.

De préférence, le socle 14 comprend sur sa face interne 14I une partie en forme de boîtier creux 22 dans laquelle la partie renflée 18 de la palette 12 peut s'encastrer complètement par complémentarité de forme.

De préférence, le socle 14 comprend sur un de ses bords latéraux encore une partie guide-vitre 24 en forme générale de « U » permettant de guider la vitre 106 lors de son coulissement vertical.

En position de repos, la palette 12 se situe en affleurement de la carrosserie, plus particulièrement du cadre 108 de la vitre 106, comme le montre la [fig.2] ou la [fig.3].

Conformément à l'invention, la commande d'ouverture 10 comprend un mécanisme 30 d'articulation de la palette 12 sur le socle 14 configuré pour autoriser un déplacement de la palette 12 selon une trajectoire en élévation et en inclinaison par rapport au socle 14.

Cette configuration d'articulation permet de s'affranchir des contraintes liées à la forme géométrique de la palette 12 grâce au degré de liberté de mouvement en élévation de la palette 12 par rapport à une surface extérieure de l'ouvrant 104.

Par exemple, l'enjoliveur 16 comprend un bord latéral prévu pour être monté du côté d'un panneau vitré 106 de l'ouvrant 104 qui présente un contour non rectiligne. Plus généralement, le contour de l'enjoliveur peut représenter une figure géométrique complexe non nécessairement triangulaire ou rectangulaire de fait de son déplacement en élévation. Ceci présente un avantage important intégrer parfaitement la commande d'ouverture dans le montant arrière de l'ouvrant quelle que soit la forme du montant arrière 114.

Le mécanisme d'articulation 30 comprend des premier 32 et deuxième 34 leviers articulés sur la palette 12 et le socle 14 afin de définir conjointement avec la palette 12 et le socle 14 une liaison de type quadrilatère articulé déformable.

Dans cet exemple, le premier levier 32 est connecté de manière rotative au socle 14 selon un premier axe de pivot distal X1 et à la palette 12 selon un premier axe de pivot proximal X2. De même, le deuxième levier 34 est connecté de manière rotative au socle 14 selon un deuxième axe de pivot distal X3 et à la palette 12 selon un deuxième axe de pivot proximal X4. De préférence, ces axes de pivotX1 à X4 s'étendent selon une direction verticale au véhicule automobile et sensiblement parallèlement les uns par rapport aux autres. La palette 12 est ainsi articulée au socle 14 par une structure déformable définissant un quadrilatère comme cela va être explicité ci-dessous.

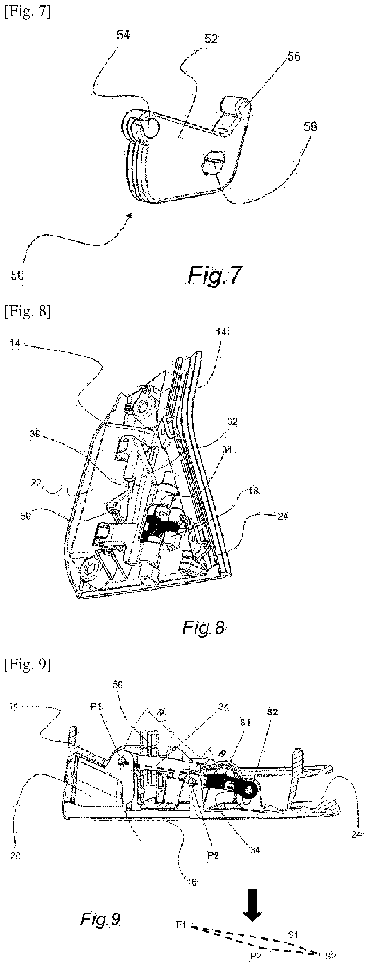

On considère un plan médian orthogonal sensiblement aux axes de pivot X1 à X4 tel que le plan de coupe de la [fig.9] ou 11. Dans ce plan, on peut définir le quadrilatère articulé avec des points fictifs (obtenus par projection orthogonale des points d'articulations réels dans le plan médian) P1 et P2 d'articulation des leviers 32 et 34 à la palette 12 et S1 et S2 d'articulation au socle 14. Dans ce quadrilatère, les côtés sont formés par les rayons de pivotement des leviers 32 et 34 et le segment séparant les points d'articulations S1 et S2 sur le socle 14 d'une part et le segment séparant les points d'articulations P1 et P2 sur la palette 12 d'autre part.

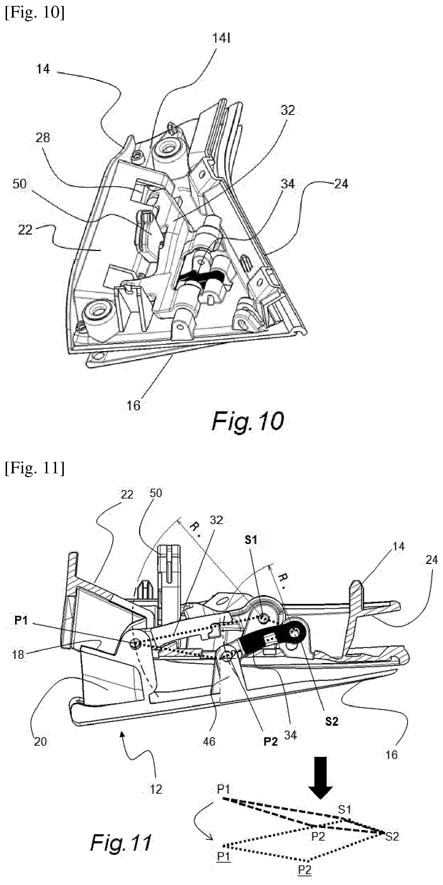

Lors du déplacement de la palette 12, on voit notamment sur la [fig.11] que le quadrilatère initial (en trait discontinu) se déforme pour former le quadrilatère final (en pointillé). La palette 12 (segment P1-P2) pivote et s'élève par rapport au socle d'interface 14 (segment S1-S2).

De préférence, chaque levier 32 (respectivement 34) comprend des portions proximale 32P (resp.34P) et distale 32D (resp.34D) connectées de manière rotative respectivement à la palette 12 et au socle 14.

Dans cet exemple, le premier levier 32 est un levier de plus grand rayon de débattement que celui du deuxième levier 34. Comme cela ressort clairement de la [fig.9] ou 11, les leviers présentent des profils longitudinaux, entre leurs deux articulations, globalement rectilignes pouvant être toutefois légèrement arqués.

Par ailleurs, de préférence, la portion distale 32D du premier levier 32 est pourvue d'une fourche à deux branches 36A, 36B entre lesquelles s'étend la portion proximale 34P du deuxième levier 34 dans une configuration escamotée du mécanisme d'articulation 30.

Ainsi, les deux leviers 32 et 34 sont agencés en étant engagés l'un dans l'autre dans la configuration escamotée correspondant à la position de repos de l'organe de manoeuvre 12.

Sur la [fig.8], on voit que la portion distale 32D du premier levier 32 se termine en forme de fourche comprenant les deux branches 36 distantes l'une de l'autre et se terminant chacune par un palier de guidage respectivement 38A et 38B en rotation autour d'un tourillon associé 40, solidaire du socle 14.

Les deux tourillons 40 s'étendent à distance l'un de l'autre selon le premier axe de rotation distale X1 afin de former deux régions distinctes d'articulation distale entre lesquelles peut s'étendre au moins partiellement la portion proximale 34P du deuxième levier 34 dans sa configuration escamotée.

En outre, dans l'exemple illustré, la portion proximale 32P du levier 32 se termine également en forme de fourche avec deux branches 37 distantes l'une de l'autre et présentant en extrémité deux joues percées parallèles pour recevoir l'axe de rotation X1. Dans l'exemple illustré, la partie renflée creuse 20 de la palette 12 est pourvue de deux pattes 26 munies chacune d'un orifice transversal aligné pour le passage d'un axe d'articulation X2 du mécanisme d'articulation 30. Par exemple, chaque patte 26 est configurée pour traverser le boîtier du socle 14 par un évidement correspondant 28 ménagé dans le boîtier 22 du socle 14. Ces pattes 26 forment ainsi des supports d'articulation et montage de l'axe de rotation X2 de la partie proximale 32P du levier 32.

Par ailleurs, en exemple, la palette 12 comprend également un support d'articulation se présentant comme un relief 42 en saillie sur la face interne 12I de la palette 12 et percé pour supporter respectivement l'axe d'articulation X4 de la partie d'extrémité proximale 34P du levier 34. En outre, dans l'exemple illustré sur la [fig.5], le socle 14 comprend un évidement 44 au travers duquel est engagé le support d'articulation 42. Le deuxième levier 34 présente par exemple une partie proximale 34P en forme de fourche à deux branches 35.

De façon analogue, le socle 14 comprend des supports d'articulations 46 pour supporter respectivement les parties d'extrémité distales 34P et 34D des deux leviers 32 et 34. Bien entendu, cette configuration de montage est un détail de réalisation de l'invention qui n'est nullement limitatif.

La commande 10 comprend en outre de façon classique un mécanisme 30 de transmission permettant de transmettre le mouvement de la palette 12 à un câble destiné à commander une serrure (non représentée) de l'ouvrant.

Le mécanisme 30 comprend un levier de renvoi 50 qui est relié par exemple à un câble d'actionnement à distance dirigé vers la serrure (non représentée) de l'ouvrant considéré. Par exemple, le levier de renvoi 50 est monté pivotant autour d'un axe solidaire du socle 14 matérialisé par un tourillon 60, par exemple s'étendant perpendiculairement aux axes d'articulation X1 à X4 du mécanisme 30.

Par ailleurs, selon une forme préférée de réalisation de l'invention, le mécanisme d'articulation 30 est agencé pour coopérer avec le levier de renvoi 50 de façon à provoquer le pivotement du levier de renvoi 50 lors du déplacement de l'organe de manoeuvre 12.

Le levier de renvoi 50 comprend par exemple un corps 52 de forme globalement plate et allongée. Le corps 52 présente également, selon sa direction allongée, une tête 54 d'extrémité pourvue d'un logement pour recevoir une extrémité d'un câble de traction mécanique de la serrure (non représentés).

Le corps 52 se termine par un pied d'extrémité en forme d'appendice 56 recourbée. Par exemple, le premier levier 32 présente alors un relief de butée 39 qui vient rencontrer le pied 56 du levier de renvoi 50 lors de son trajet d'ouverture vers la position déployée de la palette 12 pour entraîner le pivotement du levier de renvoi 50 et la traction du câble de serrure.

En outre, le corps 52 présente un orifice traversant 58 pour son articulation en pivotement autour du tourillon 60. Dans l'exemple illustré, le tourillon 60 est monté transversalement sur un bossage du socle 14 formé par la paroi du boîtier creux 22. On voit notamment que le levier de renvoi 50 s'étend de façon adjacente à la paroi externe du boîtier creux 22 selon sa direction longitudinale de entre les deux évidements 28.

Dans l'exemple illustré, la commande d'ouverture 10 est accessible à la préhension par une cavité ménagée dans une paroi du véhicule 100 qui est adjacente au montant 114 de l'ouvrant 104. Dans l'exemple illustré, la cavité est ménagée dans le panneau de custode 112.

Le chemin inverse de retour de la palette à la position affleurante après ouverture de la porte se fait à l'aide de moyens élastiques de type ressort qui ne seront pas plus décrits.

On va maintenant décrire les principaux aspects du fonctionnement d'une commande d'ouverture selon l'invention en référence aux figures 9, 10 et 11.

Initialement, la palette 12 est positionnée dans sa configuration affleurante de repos. L'enjoliveur 16 épouse alors parfaitement le montant vertical arrière 114 de sorte que la commande d'ouverture 10 est entièrement dissimulée dans le montant 114.

Ensuite, pour amorcer le pivotement de la palette 12, l'utilisateur engage les doigts d'une de ses mains à l'intérieur du creux 20 ménagé dans la commande d'ouverture 10 et parvient à réaliser ainsi la préhension de cette palette 12, puis à engager le déplacement de la palette 12 dans sa position déployée.

Ce déplacement conduit à l'élévation et le pivotement la palette 12 jusqu'à une position d'élévation et de pivotement maximum vers l'extérieur (voir [fig.11]). En fin de mouvement de la palette 12, le relief du premier levier 32 vient agir sur l'appendice 56 du levier de renvoi 50 ce qui provoque la traction du câble d'actionnement, ouvrant ainsi la serrure de la porte.

Lorsque la palette 12 est lâchée, celle-ci revient en position initiale affleurante, sous l'effet des divers moyens de rappels prévus qui ne seront pas plus détaillés.

L'invention ne se limite pas aux modes de réalisation précédemment décrits. D'autres modes de réalisation à la portée de l'homme du métier peuvent aussi être envisagés sans sortir du cadre de l'invention définie par les revendications ci-après.

## Revendications

1. Commande (10) d'ouverture extérieure pour un ouvrant d'un véhicule automobile (100), en particulier une porte latérale arrière (102) du véhicule, configurée pour être intégrée et dissimulée dans un montant de vitre de l'ouvrant, la commande (10) comprenant un organe (12) de manoeuvre manuel du genre palette de préhension, un socle (14) d'interface agencé selon le montant (114) et sur lequel est monté articulé la palette (12) entre une position de repos intégrée au montant (114) en affleurement et une position de travail déployée en saillie du montant (114), **caractérisé en ce qu'**elle comprend un mécanisme (30) d'articulation de la palette (12) sur le socle (14) configuré pour autoriser un déplacement de la palette (12) selon une trajectoire en élévation et en pivotement par rapport au socle (14) **et en ce que** la palette (12) comprend un enjoliveur (16) du montant (114), solidaire de la palette (12), conformé pour habiller au moins partiellement le pourtour du montant (114) et pour recouvrir le socle d'interface (14) dans la position de repos.

2. Commande d'ouverture (10) selon la revendication précédente, dans laquelle l'enjoliveur (16) est configuré pour délimiter au moins un tronçon du montant (114) d'un bord à l'autre du montant (114) selon une direction sensiblement transversale à ce montant (114).

3. Commande d'ouverture (10) selon l'une quelconque des revendications précédentes, dans lequel l'enjoliveur (16) est conformé pour épouser parfaitement la forme extérieure du montant (114).

4. Commande d'ouverture (10) selon l'une quelconque des revendications précédentes, dans lequel la palette (12) présente une face extérieure décorative (12E) formant l'enjoliveur (16) et une face interne (12I) opposée masquée coopérant par le mécanisme d'articulation (30) avec le socle d'interface (14).

5. Commande d'ouverture (10) selon l'une quelconque des revendications précédentes, dans laquelle la palette (12), ayant une forme générale de plaque délimitant une face externe visible (12E) formant l'enjoliveur (16) et une face interne opposée (12I), est pourvue d'une partie renflée creuse (20) ménagée en saillie sur la face interne (12I) délimitant un logement concave adapté pour recevoir la main d'un utilisateur souhaitant saisir la palette (12).

6. Commande d'ouverture (10) selon la revendication précédente, dans laquelle le socle (14) comprend une face interne (14I) pourvue d'une partie en forme de boîtier creux dans laquelle la partie renflée (20) de la palette (12) peut s'encastrer complètement par complémentarité de forme.

7. Commande d'ouverture (10) selon la revendication précédente, dans lequel ledit la partie renflée creuse (20) de la palette (12) étant pourvue de deux pattes munies chacune d'un orifice transversal pour le passage d'un axe d'articulation du mécanisme d'articulation (30), chaque patte est configurée pour traverser le boîtier du socle (14) par un évidement ménagé dans le boîtier.

8. Commande d'ouverture (10) selon l'une quelconque des revendications précédentes, dans lequel la palette (12) comprend une face externe décorative recouverte d'un revêtement d'habillage de type adhésif mat ou brillant.

9. Commande d'ouverture (10) selon l'une quelconque des revendications précédentes, dans lequel le socle (14) comprend une pièce guide-vitre et l'enjoliveur (16) est configuré pour recouvrir cette pièce.

10. Commande d'ouverture (10) selon l'une quelconque des revendications précédentes, dans laquelle le mécanisme d'articulation (30) comprend des premier (32) et deuxième (34) leviers articulés sur la palette (12) et le socle afin de définir avec la palette et le socle une liaison de type quadrilatère articulé.

11. Commande d'ouverture (10) selon la revendication précédente, dans lequel chaque levier (32, 34) comprend des portions proximale (32P, 34P) et distale (32D, 34D) connectées de manière rotative respectivement à la palette (12) et au socle (14) et la portion distale (32D, 34D) d'au moins un des leviers (32, 34) est pourvue d'une fourche à deux branches entre lesquelles s'étend la portion proximale (34P, 32P) de l'autre des leviers (34, 32) dans une configuration escamotée du mécanisme d'articulation (30).

12. Commande d'ouverture (10) selon l'une quelconque des revendications précédentes, comprenant un levier de renvoi (50) d'actionnement d'une serrure de l'ouvrant (104) monté pivotant autour d'un axe solidaire du socle (14), le mécanisme d'articulation (30) coopérant avec le levier de renvoi (50) de façon à provoquer le pivotement du levier de renvoi (50) lors du déplacement de l'organe (12).

13. Commande d'ouverture (10) selon l'une quelconque des revendications précédentes, dans lequel l'enjoliveur (16) comprend un bord latéral prévu pour être monté du côté d'un panneau vitré (106) de l'ouvrant (104) présentant un contour non rectiligne.

14. Ouvrant (104) de véhicule automobile comprenant une commande d'ouverture extérieure **caractérisé en ce que** la commande d'ouverture est une commande d'ouverture (10) selon l'une quelconque des revendications précédentes intégrée et dissimulée dans un montant (114) d'un panneau de vitre (106) de l'ouvrant (104).

15. Véhicule automobile (100) comprenant un ouvrant (104) selon la revendication 14, dans lequel la commande d'ouverture (10) est accessible à la préhension par une cavité ménagée dans une paroi du véhicule (100) qui est adjacente au montant (114) de l'ouvrant (104), tel qu'une paroi d'un panneau de custode (112).

## Patentansprüche

1. Außenöffnungssteuerung (10) für einen Flügel eines Kraftfahrzeugs (100), insbesondere eine hintere Seitentür (102) des Fahrzeugs, die so konfiguriert ist, dass sie in einen Fensterpfosten des Flügels integriert und darin verborgen ist, wobei die Steuerung (10) ein Organ (12) zur manuellen Betätigung nach Art einer Greifpalette umfasst, einen Schnittstellensockel (14), der entlang des Pfostens (114) angeordnet ist und an dem die Palette (12) zwischen einer bündig in den Pfosten (114) integrierten Ruhestellung und einer ausgeklappten, aus dem Pfosten (114) herausragenden Arbeitsstellung gelenkig angebracht ist, **dadurch gekennzeichnet, dass** sie einen Mechanismus (30) zum Anlenken der Palette (12) an den Sockel (14) umfasst, der so konfiguriert ist, dass er eine Verschiebung der Palette (12) entlang einer Bahn in Elevation und Schwenkung in Bezug auf den Sockel (14) zulässt, **und dass** die Palette (12) einen Radkappen (16) des Pfostens (114) umfasst, die fest mit der Palette (12) verbunden ist und so gestaltet ist, dass sie zumindest teilweise den Umfang des Pfostens (114) verkleidet und den Schnittstellensockel (14) in der Ruhestellung abdeckt.

2. Öffnungsantrieb (10) nach dem vorhergehenden Anspruch, bei dem der Radkappen (16) so konfiguriert ist, dass sie mindestens einen Abschnitt des Pfostens (114) von einer Kante des Pfostens (114) zur anderen in einer Richtung begrenzt, die im Wesentlichen quer zu diesem Pfosten (114) verläuft.

3. Öffnungsantrieb (10) nach einem der vorhergehenden Ansprüche, bei dem der Radkappen (16) so geformt ist, dass sie sich perfekt an die äußere Form des Pfostens (114) anpasst.

4. Öffnungssteuerung (10) nach einem der vorhergehenden Ansprüche, wobei die Palette (12) eine dekorative Außenseite (12E), die den Radkappen (16) bildet, und eine gegenüberliegende verdeckte Innenseite (12I) aufweist, die über den Gelenkmechanismus (30) mit dem Schnittstellensockel (14) zusammenwirkt.

5. Öffnungssteuerung (10) nach einem der vorhergehenden Ansprüche, bei der die Palette (12), die eine allgemeine Plattenform hat, die eine sichtbare Außenseite (12E), die den Radkappen (16) bildet, und eine gegenüberliegende Innenseite (12I) begrenzt, mit einem hohlen, wulstigen Teil (20) versehen ist, der vorspringend an der Innenseite (121) angebracht ist und eine konkave Aufnahme begrenzt, die geeignet ist, die Hand eines Benutzers aufzunehmen, der die Palette (12) ergreifen möchte.

6. Öffnungsantrieb (10) nach dem vorhergehenden Anspruch, bei dem der Sockel (14) eine Innenseite (14I) aufweist, die mit einem hohlen kastenförmigen Teil versehen ist, in den der ausgebeulte Teil (20) der Palette (12) formschlüssig vollständig eingelassen werden kann.

7. Öffnungsantrieb (10) nach dem vorhergehenden Anspruch, wobei der genannte hohl ausgebauchte Teil (20) der Palette (12) mit zwei Laschen versehen ist, die jeweils mit einer Queröffnung für den Durchgang eines Gelenkzapfens des Gelenkmechanismus (30) versehen sind, wobei jede Lasche so konfiguriert ist, dass sie durch das Gehäuse des Sockels (14) durch eine in dem Gehäuse ausgebildete Aussparung hindurchgeführt werden kann.

8. Öffnungssteuerung (10) nach einem der vorhergehenden Ansprüche, wobei die Palette (12) eine dekorative Außenseite umfasst, die mit einer Verkleidungsbeschichtung vom Typ matter oder glänzender Klebstoff bedeckt ist.

9. Öffnungssteuerung (10) nach einem der vorhergehenden Ansprüche, wobei der Sockel (14) ein Glasführungsteil umfasst und der Radkappen (16) so gestaltet ist, dass sie dieses Teil abdeckt.

10. Öffnungssteuerung (10) nach einem der vorhergehenden Ansprüche, wobei der Gelenkmechanismus (30) einen ersten (32) und einen zweiten (34) Hebel umfasst, die an der Palette (12) und dem Sockel angelenkt sind, um mit der Palette und dem Sockel eine Gelenkviereckverbindung zu definieren.

11. Öffnungssteuerung (10) nach dem vorhergehenden Anspruch, wobei jeder Hebel (32, 34) einen proximalen (32P, 34P) und einen distalen (32D, 34D) Abschnitt aufweist, die drehbar mit der Palette (12) bzw. dem Sockel (14) verbunden sind, und der distale Abschnitt (32D, 34D) von mindestens einem der Hebel (32, 34) mit einer Gabel mit zwei Zinken versehen ist, zwischen denen sich der proximale Abschnitt (34P, 32P) des anderen der Hebel (34, 32) in einer eingezogenen Konfiguration des Gelenkmechanismus (30) erstreckt.

12. Öffnungssteuerung (10) nach einem der vorhergehenden Ansprüche, mit einem Umlenkhebel (50) zur Betätigung eines Schlosses des Flügels (104), der um eine fest mit dem Sockel (14) verbundene Achse schwenkbar montiert ist, wobei der Gelenkmechanismus (30) mit dem Umlenkhebel (50) so zusammenwirkt, dass er bei der Bewegung des Organs (12) das Schwenken des Umlenkhebels (50) bewirkt.

13. Öffnungssteuerung (10) nach einem der vorhergehenden Ansprüche, wobei der Radkappen (16) eine Seitenkante umfasst, die dazu vorgesehen ist, auf der Seite einer Glasplatte (106) des Flügels (104) montiert zu werden, die eine nicht geradlinige Kontur aufweist.

14. Kraftfahrzeugflügel (104) mit einer externen Öffnungssteuerung, **dadurch gekennzeichnet, dass** die Öffnungssteuerung eine Öffnungssteuerung (10) nach einem der vorhergehenden Ansprüche ist, die in einem Pfosten (114) einer Fensterplatte (106) des Flügels (104) integriert und verborgen ist.

15. Kraftfahrzeug (100) mit einem Flügel (104) nach Anspruch 14, bei dem die Öffnungssteuerung (10) durch einen Hohlraum in einer Wand des Fahrzeugs (100), die an dem Pfosten (114) des Flügels (104) angrenzt, wie eine Wand einer Heckklappe (112), zum Greifen zugänglich ist.

## Claims

1. External opening control (10) for an opening member of a motor vehicle (100), in particular a rear side door (102) of the vehicle, configured so as to be integrated and concealed in a window pillar of the opening member, the control (10) comprising a manual operating member (12) of the gripping paddle type, an interface base (14) arranged along the pillar (114) and on which the pallet (12) is articulated between a rest position integrated into the pillar (114) flush with it and a deployed working position projecting from the pillar (114), **characterised in that** it comprises a mechanism (30) for articulating the pallet (12) on the base (14), configured to allow the pallet (12) to move along an elevated and pivoting path relative to the base (14), **and in that** the pallet (12) comprises a cover (16) for the pillar (114), secured to the pallet (12) and shaped to cover at least part of the perimeter of the pillar (114) and to cover the interface base (14) in the rest position.

2. Opening control (10) according to the preceding claim, in which the trim (16) is configured to delimit at least one section of the pillar (114) from one edge to the other of the pillar (114) in a direction substantially transverse to this pillar (114).

3. Opening control (10) according to any one of the preceding claims, in which the trim (16) is shaped to perfectly match the external shape of the pillar (114).

4. Opening control (10) according to any one of the preceding claims, in which the blade (12) has a decorative outer face (12E) forming the trim (16) and a masked opposite inner face (12I) cooperating via the articulation mechanism (30) with the interface base (14).

5. Opening control (10) according to any one of the preceding claims, in which the pallet (12), having the general shape of a plate delimiting a visible outer face (12E) forming the trim (16) and an opposite inner face (12I), is provided with a hollow bulged portion (20) arranged to project from the inner face (12I) delimiting a concave housing adapted to receive the hand of a user wishing to grasp the pallet (12).

6. Opening control (10) according to the preceding claim, in which the base (14) comprises an internal face (14I) provided with a part in the form of a hollow casing into which the bulged part (20) of the pallet (12) can be completely fitted by complementarity of shape.

7. Opening control (10) according to the preceding claim, wherein the said hollow bulged part (20) of the pallet (12) being provided with two lugs each provided with a transverse orifice for the passage of a hinge pin of the hinge mechanism (30), each lug is configured to pass through the housing of the base (14) via a recess formed in the housing.

8. Opening control (10) according to any one of the preceding claims, in which the pallet (12) comprises a decorative outer face covered with a matt or glossy adhesive-type covering.

9. Opening control (10) according to any one of the preceding claims, in which the base (14) comprises a window guide part and the trim (16) is configured to cover this part.

10. Opening control (10) according to any one of the preceding claims, in which the articulation mechanism (30) comprises first (32) and second (34) levers articulated on the pallet (12) and the base in order to define with the pallet and the base a link of the articulated quadrilateral type.

11. Opening control (10) according to the preceding claim, wherein each lever (32, 34) comprises proximal (32P, 34P) and distal (32D, 34D) portions rotatably connected respectively to the pallet (12) and to the base (14) and the distal portion (32D, 34D) of at least one of the levers (32, 34) is provided with a fork with two branches between which the proximal portion (34P, 32P) of the other of the levers (34, 32) extends in a retracted configuration of the articulation mechanism (30).

12. Opening control (10) according to any one of the preceding claims, comprising a return lever (50) for actuating a lock of the leaf (104) mounted so as to pivot about an axis integral with the base (14), the articulation mechanism (30) cooperating with the return lever (50) so as to cause the return lever (50) to pivot when the member (12) is moved.

13. Opening control (10) according to any one of the preceding claims, in which the trim (16) comprises a lateral edge designed to be mounted on the side of a glazed panel (106) of the opening member (104) having a non-rectilinear contour.

14. A motor vehicle door (104) comprising an external opening control, **characterised in that** the opening control is an opening control (10) according to any one of the preceding claims, integrated and concealed in a pillar (114) of a window panel (106) of the door (104).

15. A motor vehicle (100) comprising an opening panel (104) as claimed in claim 14, in which the opening control (10) is accessible for gripping via a cavity formed in a wall of the vehicle (100) which is adjacent to the pillar (114) of the opening panel (104), such as a wall of a rear quarter panel (112).
